(19) Europäisches Patentamt
European Patent Office
Office européen des brevets

(11) **EP 0 585 795 B1**

(12) **EUROPÄISCHE PATENTSCHRIFT**

(45) Veröffentlichungstag und Bekanntmachung des Hinweises auf die Patenterteilung:
**21.05.1997 Patentblatt 1997/21**

(51) Int. Cl.[6]: **B01D 53/94**, B01J 23/30, B01J 23/22, B01J 27/053, B01J 27/199

(21) Anmeldenummer: **93113551.1**

(22) Anmeldetag: **25.08.1993**

(54) **Verfahren zur Reinigung der Abgase von Dieselmotoren**

Process for purifying exhaust gases of diesel engines

Procédé pour la purification des gaz d'échappement de moteurs diesel

(84) Benannte Vertragsstaaten:
**AT CH DE ES FR GB IT LI NL SE**

(30) Priorität: **03.09.1992 DE 4229471**

(43) Veröffentlichungstag der Anmeldung:
**09.03.1994 Patentblatt 1994/10**

(73) Patentinhaber: **MAN Nutzfahrzeuge Aktiengesellschaft
80976 München (DE)**

(72) Erfinder:
• **Kreutmair, Josef, Dipl.-Ing. (FH)
D-85276 Pfaffenhofen (DE)**
• **Jacob, Eberhard, Dr. Dipl.-Chem.
D-82327 Tutzing (DE)**

(56) Entgegenhaltungen:
FR-A- 2 063 216          US-A- 2 942 933
US-A- 4 238 370

**Beschreibung**

Die Erfindung bezieht sich auf ein Verfahren zur Reinigung der Abgase von Dieselmotoren unter Anwendung eines Oxidationskatalysators. Handelsübliche Diesel-Oxidationskatalysatoren enthalten als Aktivkomponenten Platinmetalle. Durch überschüssigen $O_2$ werden die durch unvollkommene motorische Verbrennung der Betriebsstoffe in Abgas enthaltenen gasförmigen organischen Verbindungen (VOC) - die aus Kohlenwasserstoffen (HC) als Hauptbestandteil und aus Geruchs- und Reizstoffen (Aldehyde u.a.) bestehen - und die hochsiedenden HC-Komponenten, welche sowohl gasförmig im Abgas als auch als am Partikel angelagerte Stoffe emittiert werden, im Kontakt mit den Platinmetall-Oxidationskatalysatoren oxidiert. Diese katalytische Oxidation der HC vermag die Dieselpartikelmasse im Bereich zwischen 170 und 350°C deutlich zu reduzieren. Unterhalb von 170°C gelingt es jedoch hiermit nicht, die typischen Negativerscheinungen des Dieselmotors, wie Weißrauch oder Emission von Geruchs- und Reizstoffen zu reduzieren. Oberhalb von 350°C wird der $SO_2$-Anteil des Abgases zunehmend zu $SO_3/H_2SO_4$ oxidiert und damit die Dieselpartikelmasse durch angelagerte "Sulfate" teilweise drastisch erhöht [SAE Paper 910607 (1991)].

Um das Tieftemperaturverhalten der Platinmetall-Oxidationskatalysatoren zu verbessern, wurden deshalb Mittel vorgesehen, mit denen die VOC und Partikel bei niedrigen Temperaturen absorbiert und erst bei Temperaturen oberhalb der Anspringtemperatur des Platinmetall-Oxidationskatalysatoren (200 - 250°C) wieder freigegeben werden.

Aus der DE-B-22 57 968 ist eine Vorrichtung dieser Art bekannt, bei der in der Abgasleitung eine Füllung aus Metallwolle oder ähnlichem vor einem Oxidationskatalysator vorgesehen ist. Diese Vorrichtung ist so ausgelegt, daß aus kalten Abgasen Wasser, Rußpartikel und Kohlenwasserstoffe (HC) sich in der Metallwolle niederschlagen. Die auf diese Weise vorgereinigten und beruhigten Gase durchströmen dann den Oxidationskatalysator. Bei Erwärmung des Motors auf Betriebstemperatur verdampfen die zurückgehaltenen HC, die dann im Oxidationskatalysator oxidiert werden. Es hat sich aber herausgestellt, daß bei der bekannten Vorrichtung die HC bereits bei relativ niedrigen Temperaturen desorbieren und in den Oxidationskatalysator gelangen, wo sie nicht die ausreichende Temperatur zur vollständigen Oxidation vorfinden.

Um den Adsorptions-Temperaturbereich zu erweitern, wird gemäß der DE-A-39 28 760 als Adsorber Zeolith oder Mordenit vorgeschlagen. Es hat sich jedoch herausgestellt, daß insbesondere sich im Kaltstart entwickelnder Wasserdampf die Adsorptionsfähigkeit dieser bekannten Mittel beeinträchtigt. Außerdem hat Zeolith kein hohes selektives Adsorptionsvermögen.

Um die vorzeitige Desorption von VOC zu verhindern, wird in EP-A-0460542 ein Doppelkonverter-System vorgeschlagen, welches sich der Absperrwirkung von drei Abgasklappen bedient.

Der Erfindung liegt daher die Aufgabe zugrunde, ein Verfahren zu entwickeln, mit dem es gelingt, bei Abgastemperaturen unterhalb von 170°C die Emissionen von flüchtigen organischen Verbindungen und Dieselpartikeln zu vermindern und bei Abgastemperaturen oberhalb von 350°C eine Erhöhung der Dieselpartikelemission durch Sulfatbildung zu unterbinden.

Die Aufgabe wird erfindungsgemäß mit den Merkmalen des Anspruchs 1 gelöst.

Dieselabgas wird dabei mit einem Sorptions-/Oxidationskatalysator (SO-Kat) kontaktiert. Es hat sich herausgestellt, daß mit einem derartigen Katalysator die Emission flüchtiger organischer Verbindungen (VOC), von an Rußpartikeln angelagerten organischen Verbindungen (SO) und von Feinstrußpartikeln aus Abgasen stark vermindert werden können. Ein zweiter Katalysator, wie beim Stand der Technik ist nicht notwendig.

Ein weiterer Vorteil ist, daß durch die Vermeidung von Platin die Herstellkosten, insbesondere der vergleichsweise großvolumigen Katalysatoren für Nutzfahrzeuge, deutlich gesenkt werden.

Der SO-Kat wird vorzugsweise als feinzelliger Wabenkörper mit 7 - 70 Zellen/cm$^2$ (50 - 500 Zellen/inch), entweder als extrudierter Vollkatalysator oder als Dickschichtträgerkatalysator ausgebildet.

Der SO-Kat besteht aus einer hochoberflächigen, porösen Kontaktmasse mit einer BET-Oberfläche von 30 - 250 m$^2$/g. Diese Masse verfügt über ausreichend Chemisorptionsplätze für die VOC und über eine ausreichend aktive Oberfläche für die Adhäsion von Rußpartikeln.

Die Dimensionierung des SO-Kat erfolgt vorzugsweise derart, daß der SO-Kat bei Abgastemperaturen unter 170°C mit Flächengeschwindigkeiten von max. 1O m/h**, bevorzugt mit 2 - 5 m/h**, bei Nenndrehzahl und Vollast des Motors mit Flächengeschwindigkeiten von max. 25 m/h**, bevorzugt mit 10 - 15 m/h**, vom Abgas durchströmt wird.

Es wurde gefunden, daß die aktive Masse des SO-Kat vorteilhaft als hochoberflächige, feinteilige Feststoffsäuren im System $V_2O_5/TiO_2/SO_4^{2-}$ ausgebildet wird. Als besonders aktiv erwiesen sich Abmischungen im System $V_2O_5/WO_3/TiO_2/SiO_2/Al_2O_3$, die partiell sulfatisiert oder sulfatisiert und phosphatiert werden. Die Sorptions- und Oxidationsaktivität des SO-Kat ist besonders hoch, wenn gemäß einer weiteren Ausgestaltung der Erfindung die aktive Masse folgende Zusammensetzung (in Gew.%) besitzt: 0,06 - 6% $V_2O_5$, O - 20% $WO_3$, 10 - 90% $TiO_2$ (bevorzugt in der Anatas-Modifikation), 0 - 95% $SiO_2$ (z.B. als Aerosil), 0 - 30% $Al_2O_3$. Der Sulfatgehalt sollte 0,05 - 1% und der Phosphatgehalt 0 - 2% betragen. Ein Teil des Gehalts an $Al_2O_3$ und $SiO_2$ kann auch durch chemische Verbindungen im

---

** Abgasvolumenstrom in Normkubikmeter pro Stunde geteilt durch geometrische Oberfläche des Katalysators in Ouadratmeter.

2

System $Al_2O_3$ - $SiO_2$ - $H_2O$ als H-Form siliziumreicher Zeolithe (z.B. H-Mordenit) ersetzt werden.

Bei den oben beschriebenen SO-Kat erfolgt die Chemisorption bevorzugt durch Protonierung der VOC an den Brönsted-sauren Zentren der SO-Kat-Oberfläche bei Temperaturen unter 170°C. Die katalytische Oxidation der chemisorbierten VOC erfolgt durch $V_2O_5$ als Aktivkomponente bei Temperaturen über 170°C. Es wurde gefunden, daß die Chemisorption der VOC, insbesondere die der schwerflüchtigen HC einerseits und die katalytische Oxidation andererseits, die bei Temperaturerhöhung auf über 170°C einsetzt, nahtlos ineinander übergreifen, ohne daß eine nennenswerte Desorption der VOC bei Zwischentemperaturen feststellbar wäre. Bei den nach Anspruch 4 angewand ten - im Vergleich mit einem Platinmetall-Oxidationskatalysator - geringen Flächengeschwindigkeiten, wird eine weitgehend vollständige Oxidation der VOC durch die Aktivkomponente $V_2O_5$ ermöglicht. Der Arbeitstemperaturbereich liegt zwischen 170 und 650°C. Die Oxidationsprodukte sind $CO_2$ (3/4) und CO (1/4). Im Dieselabgas vorhandenes $SO_2$ wird nicht nennenswert zu $SO_3/H_2SO_4$ oxidiert (0,5 - 3% Umsatz).

Bei Anfall von CO oder auch bei Bildung von geringen CO-Mengen bei der HC-Oxidation am SO-Kat, kann dem SO-Kat ein Pt-Oxidationskatalysator mit einer Raumgeschwindigkeit von 150 - 200.000 $h^{-1}$ nachgeschaltet werden, um CO zu beseitigen.

Der Kohlenstoffanteil der Dieselrußpartikel, die von konventionellen Dieselmotoren emittiert werden, besteht hauptsächlich aus nahezu kugelförmigen Baueinheiten mit einem Durchmesser von 20 - 30 nm - entsprechend einer Zusammensetzung von C $_{1\ Million}$. Diese Partikel kondensieren miteinander zu geraden oder verzweigten Ketten. Im Vergleich hierzu besteht ein SO-Kat aus einzelnen Metall-Oxidpartikeln von etwa 20 nm Durchmesser. Eine Kontaktkatalyse ist deshalb mangels ausreichender, gemeinsamer Kontaktflächen nicht vorstellbar.

Hochaufgeladene, ladeluftgekühlte DI-Turbodieselmotoren emittieren dagegen im Vergleich mit konventionellen Dieselmotoren einen einen größeren Anteil an Feinstrußpartikeln. Die Feinstrußpartikel mit Durchmessern < 0,5 nm bestehen aus Kohlenstoffbaueinheiten von $C_{60}$ (Fulleren, Durchmesser 0,07 nm) bis $C_{500}$. Es wurde gefunden, daß diese Feinstrußpartikel - die auf dem SO-Kat genügend Kontaktfläche vorfinden - weitgehend durch den SO-Kat bei Temperaturen unter 170°C durch Sorption zurückgehalten und bei Temperaturen beginnend ab 170°C katalytisch oxidiert werden. Der SO-Kat ist damit in der Lage, Feinstpartikel aus Kohlenstoff aus dem Abgas zu entfernen.

Größere Rußpartikel können an der Oberfläche des SO-Kat durch Adhäsion locker abgebunden werden. Dieser Adhäsionseffekt wird durch Sorptionseffekte - ermöglicht durch die an die Kohlenstoffpartikel angelagerten HC (= SOF-Anteil) - verstärkt. Bei Temperaturerhöhung erfolgt katalytische Oxidation der an die Partikel angelagerten HC.

Beispiel 1:

Ein Wabenkörper (Durchmesser 280 mm, Länge 250 mm, Wandstärke 0,4 mm, 200 Zellen/$inch^2$, 1700 $m^2/m^3$ geometrische Oberfläche) wird durch Extrudieren und Kalzinieren einer gemäß DE-B-24 58 888 hergestellten innigen Mischung aus 0,8% $V_2O_5$, 10% $WO_3$, 0,5% $SO_4^{2-}$, 12% strukturellen Promotoren und Rest $TiO_2$ (Anatas, 70 $m^2/g$) geformt.

Beispiel 2:

Ein Trägerkörper (Durchmesser 280 mm, Länge 120 mm, Wandstärke 0,05 mm, 300 Zellen/$inch^2$, 2100 $m^2/m^3$ geometrische Oberfläche) aus hochtemperaturbeständigem FeCrAl-Stahl wird mit einer wäßrigen Suspension von $TiO_2$ (Anatas, 70 $m^2/g$, 0,5% $PO_4^{3-}$ 1% $SO_4^{2-}$), $Al_2O_3$ (120 $m^2/g$) und $SiO_2$ (Degussa FK 320, 170 $m^2/g$) belegt, bei 130° getrocknet und an Luft bei 650° kalziniert. Das Gewichtsverhältnis von $TiO_2$ : $Al_2O_3$ : $SiO_2$ wurde zu 6 : 2 : 1 eingestellt. Die Gesamtmenge an Mischoxid beträgt 450 g/l Wabenvolumen. Anschließend wird mit einer wässrigen Vanadyloxalatlösung imprägniert, bei 130° getrocknet und bei 400° kalziniert. Die derart imprägnierte $V_2O_5$-Menge wird zu 9 g/l Liter Wabenvolumen eingestellt.

Beispiel 3:

Die SO-Kat-Wabenkörper gemäß Beispiel 1 und 2 wurden an einem Motorprüfstand getestet, der mit einem 5-Zylinder DI-Turbodieselmotor (235 KW, 10 l-Hubraum) und einer Wirbelstrombremse Typ W 400 der Fa. Schenk AG ausgerüstet war. Der Versuchskraftstoff enthielt 0,05% Schwefel. Als Schmieröl wurde Shell Myrina TX verwendet. Es wurden im Rahmen des 13-Stufentests nach 88/77/EWG HC-, Partikel- und Gesamtaldehyd- Massenströme bestimmt. Zur HC-Bestimmung wurden FID-Meßgeräte der Fa. Testa eingesetzt. Die Partikelmasse wurde im unverdünnten Abgas bei 80°C (Pall-Filter) gravimetrisch bestimmt. Der Anteil der SOF-Fraktion an der Partikelmasse wurde nach Soxhlet-Extraktion mit $CH_2Cl_2$ gravimetrisch ermittelt. Der Sulfatanteil der Partikel wurde nach Extraktion mit Isopropanol/Wasser ionenchromatographisch bestimmt. Gesamtaldehydbestimmungen zur Beurteilung des Gehalts an Geruchs- und Reizstoffen erfolgten nach der AHMT-Methode. [H. König, Staub Reinhalt. Luft 45 (1985) 423]. Die Bestimmung der Kohlenstoff-Molmassen des Feinstpartikelanteils erfolgte mit einem hochauflösenden Massenspektrometer Finnigan - MAT 90 im Massenbereich von 10 - 6000 m.u.

Für den Konvertierungstest wurden mehrere Wabenkörper hintereinandergeschaltet. Der in Tab. 1 angegebene Konvertierungs- bzw. Rückhaltegrad in Prozent wurde nach der Formel:

$$\frac{\text{Konzentration vor SO-Kat - Konzentration nach SO-Kat} \times 100}{\text{Konzentration vor SO-Kat}}$$

bestimmt.

Tabelle 1

| Konvertierung/Rückhaltung von Abgaskomponenten durch SO-Kat nach Beispiel 1 und 2 im Stufentest | | | | | | | |
|---|---|---|---|---|---|---|---|
| Beispiel | Anzahl der Wabenkörper | SO-Kat Volumen [$m^3$] | Flächenge- schwind.* [m/h]** | HC % | Partikel- masse % | SOF-Anteil d. Partikelmasse % | Gesamtaldehyd % |
| 1 | 4 | 0,061 | 11,6 | 87 | 30 | 92 | 95 |
| 2 | 6 | 0,044 | 13,0 | 78 | 25 | 90 | 92 |

\* berechnet für die maximale Abgasmenge bei Nenndrehzahl und 100% Last (1200 $Nm^3$/h)
\*\* Abgasvolumenstrom in Normkubikmeter pro Stunde geteilt durch geometrische Oberfläche des Katalysators in Quadratmeter.

Der Sulfatgehalt der Partikelmasse vor und nach SO-Kat zeigt keine meßbare Änderung.

Die MS-Untersuchung der Partikelmasse vor und nach SO-Kat zeigte eine deutliche Molekulargewicht-Reduzierung des Feinstpartikelanteils mit MG von 720 ($C_{60}$, Fulleren) bis 6000 ($C_{500}$) in den nach SO-Kat gesammelten Partikeln. Damit ist eine direkte Oxidation dieser Feinstpartikel bewiesen.

Beispiel 4:

Am SO-Kat nach Beispiel 1 mit einem Volumen von 0,061 $m^3$ wurde beim Kaltlauf des Motors eine Rückhalterate für HC von 76% und von Aldehyden von 74% (gemittelt über eine Meßdauer von 1 h) gemessen Beim anschließenden positiven Lastsprung von O nach 515 Nm wurden die gespeicherten VOC (HC, Aldehyde...) weitgehend durch katalytische Oxidation zu $CO_2$ (3/4) und CO (1/4) abgebaut.

Beim Leerlauf im betriebswarmen Zustand des SO-Kat (Temperatur: 260 - 280°C) betragen die Konvertierungsraten für HC 85% und für die Gesamtaldehyde 89%.

**Patentansprüche**

1. Verfahren zur Reinigung der Abgase von Dieselmotoren unter Anwendung eines Oxidationskatalysators, dadurch gekennzeichnet, daß ein platinmetallfreier Sorptions-/Oxidationskatalysator (SO-Kat), dessen aktive Masse eine BET-Oberfläche von 30 - 250 $m^2$/g hat und aus Feststoffsäuren im System $V_2O_5$ / $TiO_2$ / $SO_4^{2-}$ zusammengesetzt ist, die gegebenenfalls $WO_3$, $SiO_2$, $Al_2O_3$ und $PO_4^{3-}$ enthalten, eingesetzt wird.

2. Verfahren nach Anspruch 1, dadurch gekennzeichnet, daß die aktive Masse des SO-Kat 0,06 - 6% $V_2O_5$, 0 - 20% $WO_3$, 10 - 90% $TiO_2$ (bevorzugt in der Anatasmodifikation), 0 - 80% $SiO_2$, 0 - 30% $Al_2O_3$, 0,05 - 1% $SO_4^{2-}$ und 0 - 1% $PO_4^{3-}$ enthält.

3. Verfahren nach einem der vorhergehenden Ansprüche, dadurch gekennzeichnet, daß der SO-Kat in Form von feinzelligen Wabenkörpern mit 7 - 70 Zellen/$cm^2$ als Vollkatalysator oder Dickschichtträgerkatalysator direkt vom Dieselabgas durchströmt wird.

4. Verfahren nach einem der vorhergehenden Ansprüche, dadurch gekennzeichnet, daß der SO-Kat so dimensioniert ist, daß dieser unterhalb von 170°C Abgastemperatur mit Flächengeschwindigkeiten des Abgases von max. 10 m/h, bevorzugt mit 2 - 5 m/h, bei Nenndrehzahl und Vollast des Motors mit Flächengeschwindigkeiten von max. 25 m/h, bevorzugt mit 10 - 15 m/h, durchströmt wird.

5. Verfahren nach den vorhergehenden Ansprüchen, dadurch gekennzeichnet, daß der SO-Kat bei Temperaturen bis 650°C eingesetzt wird und die BET-Oberfläche der aktiven Masse des SO-Kat auch im Dauerbetrieb in Gegenwart von $SO_3/H_2SO_4$ und bis 650°C stabil bleibt.

6. Verfahren nach den vorhergehenden Ansprüchen, dadurch gekennzeichnet, daß der SO-Kat bei Temperaturen zwischen 170 und 650°C zur Oxidation von dieselmotorgenerierten HC's eingesetzt wird, und daß durch seine platinmetallfreie Ausgestaltung gleichzeitig vorhandenes $SO_2$ nicht nennenswert oxidiert wird.

7. Verfahren nach den vorhergehenden Ansprüchen, dadurch gekennzeichnet, daß dem SO-Kat ein Platinmetall-Oxidationskatalysator nachgeschaltet ist, um die Oxidation von CO zu ermöglichen.

8. Verfahren nach Anspruch 7, dadurch gekennzeichnet daß der Platinmetall-Oxidationskatalysator einen Washcoat mit einer BET-Oberfläche von 200 - 300 $m^2$/g besitzt, der als Aktivkomponente 0,05 - 0,1 g/l Wabenvolumen Platinmetall aufweist.

9. Verfahren nach den vorhergehenden Ansprüchen, dadurch gekennzeichnet, daß der SO-Kat als „passives System" ohne Regelung bzw. Steuerung und bewegliche Bauteile im Abgasstrom eingesetzt wird.

**Claims**

1. A process for purifying the exhaust gases of diesel engines using an oxidation catalyst, characterised in that a platinum-metal-free sorption/oxidation catalyst (SO cat) is used, the active mass of which has a BET surface area of 30 - 250 $m^2$/g and is composed of solid acids in the $V_2O_5$ / $TiO_2$ / $SO_4^{2-}$ system, the solid acids optionally containing $WO_3$, $SiO_2$, $Al_2O_3$ and $PO_4^{3-}$.

2. A process according to claim 1, characterised in that the active mass of the SO cat contains 0.06 - 6% $V_2O_5$, 0-20% $WO_3$, 10 - 90% $TiO_2$ (preferably in the anatase form), 0 - 80% $SiO_2$, 0 - 30% $Al_2O_3$, 0.05 - 1% $SO_4^{2-}$ and 0 - 1% $PO_4^{3-}$.

3. A process according to any one of the preceding claims, characterised in that the diesel exhaust flows directly through the SO cat in the form of fine-celled honeycomb structures with 7 - 70 cells/$cm^2$ as a solid catalyst or thick-layer supported catalyst.

4. A process according to any one of the preceding claims, characterised in that the SO cat is so dimensioned that the exhaust gas flows through it at areal speeds of max. 10 m/h preferably 2 - 5 m/h, when the temperature of the exhaust gas is below 170°C, and at areal speeds of max. 25 m/h, preferably 10 - 15 m/h, when the engine is at rated speed and under full load.

5. A process according to the preceding claims, characterised in that the SO cat is used at temperatures up to 650°C, and the BET surface area of the active mass of the SO cat also remains stable during continuous operation in the presence of $SO_3$ / $H_2SO_4$ and up to 650°C.

6. A process according to the preceding claims, characterised in that the SO cat is used at temperatures between 170°C and 650°C for the oxidation of diesel-engine-generated HCs, and in that, owing to its platinum-metal-free composition, any $SO_2$ also present is not significantly oxidised.

7. A process according to the preceding claims, characterised in that a platinum-metal oxidation catalyst is arranged downstream of the SO cat to permit the oxidation of CO.

8. A process according to claim 7, characterised in that the platinum-metal oxidation catalyst is provided with a washcoat having a BET surface area of 200 - 300 $m^2$/g and having 0.05 - 0.1 g/l honeycomb volume of a platinum metal as active component.

9. A process according to the preceding claims, characterised in that the SO cat is used as a "passive system" without regulation or control or movable components in the exhaust-gas flow.

**Revendications**

1. Procédé de nettoyage des gaz d'échappement émis par des moteurs Diesel en utilisant un catalyseur d'oxydation,

caractérisé en ce qu'

on utilise un catalyseur de sorption/oxydation sans platine métallique (Cat-SO) dont la masse active a une surface superficielle BET comprise entre 30 et 250 $m^2$/g et est composée d'acide solide du système $V_2O_5/TiO_2/SO_4^{2-}$, et qui peut le cas échéant contenir également $WO_3$, $SiO_2$, $Al_2O_3$ et $PO_4^{3-}$.

2. Procédé selon la revendication 1,
   caractérisé en ce que
   la masse active du catalyseur Cat-SO est la suivante : 0,06-6 % $V_2O_5$, O-20 % $WO_3$, 10-90 % $TiO_2$ (de préférence en modification Anatas) et 0-80 % $SiO_2$, 0-30 % $Al_2O_3$, 0,05-1 % $SO_4^{2-}$ et 0-1 % $PO_4^{3-}$.

3. Procédé selon l'une quelconque des revendications précédentes,
   caractérisé en ce que
   le catalyseur Cat-SO se présente sous la forme de corps alvéolaires ayant entre 7 et 70 cellules/$cm^2$ comme catalyseur complet ou catalyseur support de couche épaisse, traversé directement par le gaz d'échappement du moteur Diesel.

4. Procédé selon l'une des revendications précédentes,
   caractérisé en ce que
   le catalyseur Cat-SO est dimensionné pour qu'en dessous d'une température de 170°C, pour les gaz d'échappement, ceux-ci passent avec des vitesses de surface maximales de 10 m/h et de préférence 2-5 m/h, pour la vitesse de rotation nominale et la pleine charge du moteur, et avec des vitesses de surface maximales de 25 m/h et de préférence 10-15 m/h.

5. Procédé selon les revendications précédentes,
   caractérisé en ce que
   le catalyseur Cat-SO est utilisé à des températures allant jusqu'à 650°C, et la surface superficielle BET de la masse active du catalyseur Cat-SO en fonctionnement permanent reste stable en présence de $SO_3/H_2/SO_4$ et jusqu'à 650°C.

6. Procédé selon l'une des revendications précédentes,
   caractérisé en ce que
   le catalyseur Cat-SO, à des températures comprises entre 170°C et 600°C, est utilisé pour l'oxydation des hydrocarbures générés par le moteur Diesel et en ce que, grâce à sa réalisation sans platine, le $SO_2$ existant simultanément n'est pas oxydé de manière significative.

7. Procédé selon les revendications précédentes,
   caractérisé en ce que
   le catalyseur Cat-SO est suivi d'un catalyseur d'oxydation à platine métallique pour permettre l'oxydation de CO.

8. Procédé selon la revendication 7,
   caractérisé en ce que
   le catalyseur d'oxydation à platine métallique possède un Washcoat ayant une surface superficielle BET de 200-300 $m^2$/g, et qui comporte comme composant actif entre 0,05 et 0,1 g/l de volume alvéolaire en platine métallique.

9. Procédé selon les revendications précédentes,
   caractérisé en ce que
   le catalyseur Cat-SO est un système passif sans régulation ni commande ni pièce mobile qui se monte dans la veine des gaz d'échappement.